# EUROPÄISCHE PATENTSCHRIFT

(11) **EP 0 483 622 B1**
(45) Veröffentlichungstag und Bekanntmachung des Hinweises auf die Patenterteilung: **21.06.1995**
(21) Anmeldenummer: 91117852.3
(22) Anmeldetag: 18.10.1991
(51) Int. Cl.: F22B 1/28

(54) **Verfahren und Vorrichtung zum Betreiben eines Dampferzeugers für Gargeräte**
Process and system for operating a steam generator for cooking apparatus
Procédé et dispositif pour opérer un générateur de vapeur pour appareils de cuisson

(30) Priorität: 27.10.1990 DE 4034239
(43) Veröffentlichungstag der Anmeldung: 06.05.1992
(73) Patentinhaber: JUNO GROSSKÜCHEN GmbH, D-35723 Herborn (DE)
(72) Erfinder: Durth, Wilfried, W-5909 Burbach (DE)
(74) Vertreter: Herrmann-Trentepohl, Werner, Dipl.-Ing.

(56) Entgegenhaltungen:
- FR-A- 2 133 930

## Beschreibung

Die Erfindung betrifft ein Verfahren zum Betreiben eines Dampferzeugers für Gargeräte und die hierzu geeignete Steuerungsvorrichtung.

Beim Erhitzen und Verdampfen von Wasser in Gargeräten besteht das Problem, daß sich je nach Härte des verwendeten Wassers im Laufe der Zeit mehr oder weniger Kalk an den Wärmetauscherflächen bzw. Heizstäben absetzt. Dies hat eine Reihe von Nachteilen. Kalkablagerungen gefährden infolge Überhitzung die Heizstäbe. Der Wärmeübergang wird durch den sich bildenden Kesselstein behindert, und der Energieverbrauch dadurch erhöht. Für den einwandfreien Betrieb muß deshalb von Zeit zu Zeit die Kalkablagerung beseitigt werden. Es sind hierzu Verfahren bekannt, bei denen der Kesselstein chemisch beseitigt wird. Verdünnte Ameisensäure, oder eine andere geeignete Säure löst den Kesselstein auf und anschließend muß das Gerät gründlich mit Wasser oder einer verdünnten Sodalösung ausgespült werden. Dies ist ein zeitraubender Vorgang.

Durch die DE-PS 1221 156 ist es auch bekannt, geringe Kalkablagerungen dadurch zu beseitigen, daß die Heizfläche auf etwa 800 ° C thermisch erhitzt und durch Abschreckung mit kaltem Wasser gelöst wird. Die evtl. sich nicht lösenden Restbestandteile müssen fortgespült werden. Zum Entfernen von Kalkpartikeln, welche sich am Boden eines Dampferzeugers für ein Gargerät abgesetzt haben, wird im DE-GM 8901904 eine Auslaufschwemmpumpe vorgeschlagen, welche in voreinstellbaren Intervallen eingeschaltet wird, um bei geöffneter Wasserablaßeinrichtung die Kalkpartikel zu entfernen.

Die zusätzlich eingebaute Auslaufschwemmpumpe erfordert einen zusätzlichen baulichen Aufwand.

Aus FR-A-2 133 930, von dem die vorliegende Erfindung im Oberbegriff ausgeht, ist ein Verfahren zum Betreiben eines Dampferzeugers für Gargeräte bekannt, wobei verfahrensmäßig zum Entfernen von Kalkablagerungen:
a) der Dampferzeuger eingeschaltet wird, bis die Dampftemperatur erreicht ist, danach
b) bei noch eingeschalteten Heizkörpern (6) die Wasserablaßeinrichtung (13, 14) des Wasserbehälters (2) geöffnet wird, wobei der Niveauregler (5) bei Unterschreiten seines unteren Schaltpunktes (N1) die Heizung zeitgesteuert überbrückt einschaltet, bis der Wasserbehälter entleert ist, und daß anschließend
c) die Wasserablaßeinrichtung (13, 14) wieder geschlossen und der Wasserbehälter (2) niveaugesteuert aufgefüllt wird.

Der Erfindung liegt die Aufgabe zugrunde, die Entkalkung und Ausspülung der Kalkpartikel eines Dampferzeugers für Gargeräte mit einfachen Mitteln zu bewerkstelligen.

Diese Aufgabe wird durch die kennzeichnenden Merkmale des Anspruchs 1 gelöst, wobei sich zweckmäßige Ausgestaltungen der Erfindung aus den kennzeichnenden Merkmalen der abhängigen Ansprüche ergeben.

Ohne zusätzliche Chemische Mittel unter Ausnutzung der bei einem Dampferzeuger vorhandenen Bauteile wird durch eine einfache Steuerungsanpassung die gewünschte Entkalkung bewirkt. An einem Ausführungsbeispiel wird die Erfindung nachstehend gezeigt und näher erläutert.

Es zeigen:
- Fig. 1: den Aufbau eines Dampferzeugers in senkrechtem Längsschnitt
- Fig. 2: den Dampferzeuger in senkrechtem Querschnitt
- Fig. 3: eine Steuerungsvorrichtung für den Betrieb des Dampferzeugers während des Entkalkungsvorganges

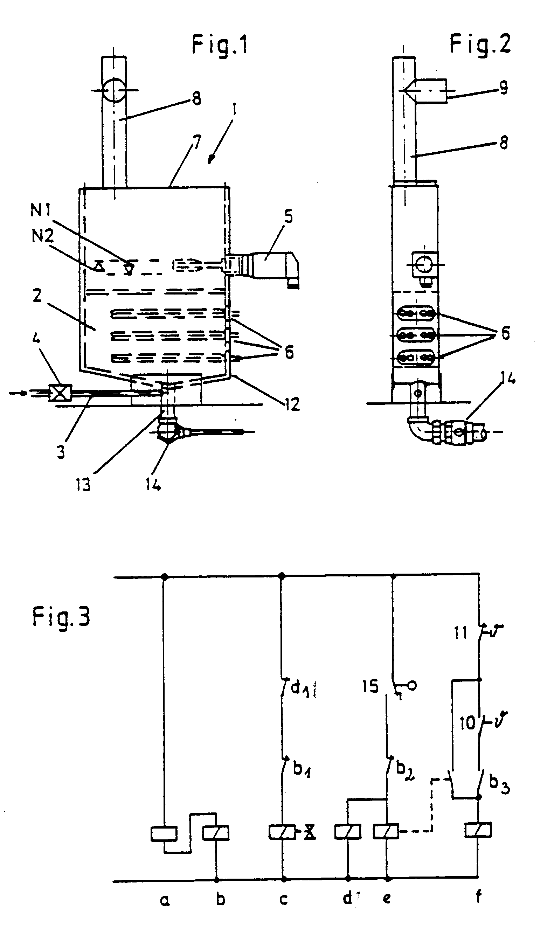

Der Dampferzeuger 1 besteht aus dem Wasserbehälter 2 mit dem Frischwasserzulauf 3, dessen Zulaufventil 4 automatisch niveaureguliert gesteuert wird, z. B. über den Niveauregler 5, welcher im Schaltplan gemäß Fig. 3 mit Relais b angedeutet ist. Bei normalem Dampfbetrieb sorgt der Niveauregler dafür, daß die im Wasserbehälter 2 angeordneten elektrisch beheizten Heizflächen 6 immer von Wasser umgeben sind.
Das einzubehaltende Niveau (unterer und oberer Wert ist durch die Linien N₁ und N₂ angedeutet).

Der Wasserbehälter 2 ist weiterhin an seiner oberen Abdeckung 7 mit einem Dampfabführungsrohr 8 versehen, über welches der im Wasserbehälter 2 bei eingeschalteten Heizkörpern 6 erzeugte Dampf durch das Anschlußstück 9 in den Garraum des nicht gezeigten Gargerätes einströmen kann. Über einen Temperaturregler 10 und einen Temperaturbegrenzer 11 wird die Dampferzeugung gesteuert.
Im Boden 12 befindet sich an der tiefsten Stelle die Ablaufleitung 13 mit dem Ablaufventil 14.
Anhand des Schaltplanes gemäß Fig. 3 soll die Funktionsweise des Dampferzeugers verständlich gemacht werden.

NORMNALBETRIEB: Der Niveauregler a schaltet über das Relais b, b₁ das Zulaufventil c und das Heizungsschütz f auf die übliche Weise. Bei zu niedrigem Wasserstand ist das Zulaufventil c geöffnet und die Heizung ausgeschaltet, während bei ausreichendem Wasserstand das Zulaufventil geschlossen und die Heizung vom Temperaturregler 10 sowie dem Temperaturbegrenzer 11 überwacht angeschlossen ist.

REINIGUNGSBETRIEB: Das Ablaufventil 14 ist mit einem Endschalter 15 versehen. Beim Öffnen des Ablaufventils 14 schließt der Endschalter 15 und aktiviert über das Relais b₂ das Relais d und das Zeitrelais e. Dies bewirkt, daß das Zulaufventil c über d₁ gesperrt und das Heizungsschütz f über das Zulaufventil c während einer vorgegebenen Zeit aktiviert wird. Die Niveauregelung ist während der vorgegebenen Zeit somit außer Betrieb gesetzt und die Heizung bleibt in Betrieb. Durch Schließen des Ablaufventiles 14 wird die Schaltung wieder auf NORMALBETRIEB zurückgeführt.

Bei der erfindungsgemäßen Verfahrensweise hat sich die Wirkung gezeigt, daß im Wasserbehälter 2 beim Ablaufen des Wassers durch die weiterhin eingeschalteten Heizkörper erhebliche Turbulenzen auftreten. Diese sorgen dafür, daß sich Kalkablagerungen von den Heizflächen ablösen, begünstigt durch die erhöhte Oberflächentemperatur, sowie abgeplatzte Kalkpartikel mit dem abfließenden Wasser ein inniges Gemenge bilden. Alle Kalkpartikel werden ohne Schwierigkeit durch die Ablaufleitung abgeführt. Eine besondere Umwälzpumpe ist nicht erforderlich. Zweckmäßig bildet der Boden 12 des Wasserbehälters eine mittlere tiefste Stelle durch Neigung der Bodenwanne.

Hier ist auch die Ablaufleitung 13 angeschlossen. Der Boden 12 dient dadurch als Sammelbecken für die abgeplatzten Ablagerungen.

## Patentansprüche

1. Verfahren zum Betreiben eines Dampferzeugers für Gargeräte, bestehend aus einem Wasserbehälter (2) und einem automatisch niveauregulierten Wasserzulauf (3), einem Dampfauslaß (8) zum automatischen Einführen von Heißdampf in den Garraum des Gargeräts und einer intervallweise arbeitenden Heizeinrichtung in Form von in den Wasserraum ragenden Heizkörpern (6), sowie einer am Boden des Wasserbehälters angeordneten Wasserablaßeinrichtung (13, 14) zum Entleeren und Ausschwemmen von Kalkpartikeln, wobei zum Entfernen von Kalkablagerungen:
a) der Dampferzeuger eingeschaltet wird, bis die Dampftemperatur erreicht ist, danach
b) bei noch eingeschalteten Heizkörpern (6) die Wasserablaßeinrichtung (13, 14) des Wasserbehälters (2) geöffnet wird, wobei der Niveauregler (5) bei Unterschreiten seines unteren Schaltpunktes (N1) die Heizung zeitgesteuert überbrückt einschaltet, bis der Wasserbehälter entleert ist, und daß anschließend
c) die Wasserablaßeinrichtung (13, 14) wieder geschlossen und der Wasserbehälter (2) niveaugesteuert aufgefüllt wird,
**dadurch gekennzeichnet**, daß bei der Reinigung der Heizkörper die Niveauregelung außer Betrieb gesetzt wird, so daß der Wasserzulauf abgesperrt wird.

2. Verfahren nach Anspruch 1, **dadurch gekennzeichnet**, **daß** der Entleerungs- und Ausschwemmungsvorgang mindestens zweimal hintereinander durchgefürt wird.

3. Steuerungsvorrichtung zur Durchführung des Verfahrens nach Anspruch 1 oder 2 **dadurch gekennzeichnet**, **daß** parallel zu den nebeneinanderliegenden Steuerkreisen für die Niveauregelung (a, b), den Wasserzulauf (c) und die Heizung (f) ein Überbrückungsschaltkreis (d, e) mit einem den Wasserzulauf unterbrechenden Relais (d₁), welcher über einen Endschalter (15) der Wasserablaufvorrichtung zuschaltbar ist, und ein Zeitrelais für die Aufrechterhaltung der Heizung, das den vom Niveauregler-Relais (b) betätigten Schalter (b3) und den vom Temperaturregler (10) betätigten Schalter überbrückt, vorgesehen sind.

## Claims

1. A method for the operation a steam generator for cooking devices, comprising a water container (2) and an automatically level-regulated water supply inlet (3), a steam outlet (8) for the automatic introduction of superheated steam into the cooking space of the cooking device and an intermittently operated heating means in the form of heating elements (6) extending into the water space, and furthermore a water draining means (13 and 14) arranged on the floor of the water container for emptying and for flushing out fur particles, in which for the removal of fur:
a) the steam generator is turned on until the steam temperature has been attained, whereafter
b) with the heating elements (6) still turned on the water draining means (13 and 14) of the water container (2) is opened,ility when its lower switching point (N1) is gone below the level regulator (5) turns on the heating means with a timed shunting effect until the water container is emptied and after this
c) the water draining device (13 and 14) is shut again and the water container (2) is filled up with a level-dependent control effect,
characterized in that during cleaning of the heating elements level regulation is discontinued so that the water supply input is shut off.

2. The method as claimed in claim 1, characterized in that the emptying and flushing operation is performed at least twice in succession.

3. A control device for the performance of the method as claimed in claim 1 or in claim 2, characterized in that in parallel to the adjacently placed control circuits for the level regulation means (a and b), for the water supply inlet (c) and for the heating means (f) a shunt circuit (d and e) is provided having a relay (d₁) interrupting the water supply inlet, and which is able to be put in circuit via a limit switch (15) of the water draining device, and a timing relay for the maintenance of heating, which timing relay shunts the switch (b3) actuated by the level regulator relay (b), and the switch actuated by the temperature regulator (10).

## Revendications

1. Procédé de fonctionnement d'un générateur de vapeur pour appareils de cuisson, composé d'un récipient d'eau (2) et d'une amenée d'eau (3), à régulation de niveau automatique, d'une évacuation de vapeur (8) pour l'introduction automatique de vapeur chaude dans l'enceinte de cuisson de l'appareil de cuisson, et d'un dispositif de chauffage, travaillant par intervalle, se présentant sous la forme de corps chauffants (6) pénétrant dans l'enceinte d'eau, ainsi qu'un dispositif d'évacuation d'eau (13, 14) disposé au fond du récipient d'eau pour assurer la vidange et l'élimination par lavage, par passage d'un courant d'eau, des particules de calcaire, où pour éliminer les dépôts de calcaire :
a) le générateur de vapeur est mis en service, jusqu'à ce que la température de vapeur soit atteinte, puis
b) lorsque les corps chauffants (6) sont encore en service, le dispositif d'évacuation d'eau (13,14) du récipient d'eau (2) est ouvert, le régulateur de niveau (5) mettant en oeuvre, sous l'action d'une commande temporelle, le fonctionnement du chauffage, et en la pontant dans le cas où l'on descend au-dessous de son point de commutation inférieur (N1), jusqu'à ce que le récipient d'eau soit vidé, et, ensuite,
c) le dispositif d'évacuation d'eau (13, 14) étant de nouveau fermé et le récipient d'eau (2) étant rempli sous l'action de la commande de niveau,
caractérisé en ce que, lors du nettoyage des corps chauffants, la régulation de niveau est mise hors service, de sorte que l'amenée d'eau soit fermée.

2. Procédé selon la revendication 1, caractérisé en ce que le processus de vidange et lavage par passage d'un courant d'eau est effectué au moins deux fois successivement.

3. Dispositif de commande pour mettre en oeuvre le procédé selon la revendication 1 ou 2, caractérisé en ce qu'en parallèle aux circuits de commande placés l'un à côté de l'autre, concernant la régulation de niveau (a, b), l'amenée d'eau (c) et le chauffage (f), sont prévus un circuit de commande de pontage (d, e) équipé d'un relais (d₁) interrompant l'amenée d'eau et pouvant être mis en circuit par l'intermédiaire d'un interrupteur final (15) du dispositif d'évacuation d'eau, et un relais temporisé, destiné à maintenir le chauffage en service, en pontant l'interrupteur (b3) actionné par le relais de régulateur de niveau (b) et l'interrupteur actionné par le régulateur de température (10).
